# EUROPEAN PATENT SPECIFICATION

(11) **EP 3 185 592 B1**
(45) Date of publication and mention of the grant of the patent: **04.11.2020**
(21) Application number: 16187523.2
(22) Date of filing: 07.09.2016
(51) Int. Cl.: H04W 4/021, G06Q 10/08, G06Q 50/28, G06Q 50/10

(54) **METHOD AND DEVICE FOR DETERMINING SERVICE AREA CORRESONDING TO CLERK COMMUNICATION ACCOUNT**
VERFAHREN UND VORRICHTUNG ZUR BESTIMMUNG DES EINEM ANGESTELLTENKOMMUNIKATIONSKONTO ENTSPRECHENDEN DIENSTGEBIETS
PROCÉDÉ ET DISPOSITIF DE DÉTERMINATION DE ZONE DE SERVICE CORRESPONDANT À UN COMPTE DE COMMUNICATION D'EMPLOYÉ

(30) Priority: 23.12.2015 CN 201510980529
(43) Date of publication of application: 28.06.2017
(73) Proprietor: Xiaomi Inc., Beijing 100085 (CN)
(72) Inventor: BAI, Zhiyong, Haidian District, Beijing 100085 (CN); WANG, Guangjian, Haidian District, Beijing 100085 (CN); WANG, Shuo, Haidian District, Beijing 100085 (CN)
(74) Representative: Steinbauer, Florian

(56) References cited:
- US-A1- 2012 246 039
- US-A1- 2015 154 559
- US-A1- 2015 178 778

## Description

### TECHNICAL FIELD

The present invention generally relates to the technical field of computers, and more particularly to a method and device for determining a service area corresponding to a clerk communication account.

### BACKGROUND

Along with development of a computer technology, terminals such as mobile phones and computers are widely used, and correspondingly, the terminals are provided with more and more types of applications with increasingly rich functions. A door-to-door service type application is a common application, such as an express delivery application.

Clerks (such as couriers) may register their own accounts in a service application (such as an express delivery application) and fill their own responsible working areas (which may be called service areas) and communication identifiers (such as mobile phone numbers) so as to enable a user intending to send out an express to know the filled responsible service areas and communication identifiers of the couriers. When delivering the express, the user may select a courier whose service area is closer.

In a process of implementing the embodiments of the present invention, it is found there are at least the following problems:
a service area of a clerk is written by the clerk, the service area corresponding to a clerk communication identifier may be not modified when the service area of the clerk is changed or the clerk quits, and under such a condition, the service area, which corresponds to the clerk communication account and can be viewed by a user, is wrong, so that the accuracy of the service area corresponding to the clerk communication account is low.

US2015/0178778A1 discloses a location-based triggered delivery system.

### SUMMARY

In order to solve the problem in a related technology, the present invention provides a method and device for determining a service area corresponding to a clerk communication account. The present invention is defined in the independent claims. The technical solutions are implemented as follows.

According to a first aspect of the present invention, a method for determining a service area corresponding to a clerk communication account is provided according to claim 1.

Optionally, the step that the each communication account which has communicated with the target clerk communication account within the historical time period with the first preset time length is determined may include that:
each communication account which has communicated with the target clerk communication account for a communication time length not exceeding a second preset time length within the historical time period with the first preset time length is determined.

In such a manner, each determined communication account communicates with the target clerk communication account for services, the accuracy of the determined service area corresponding to the target clerk communication account may further be improved, a processed data volume may be reduced, and a processing speed may be increased.

Optionally, the step that the each communication account which has communicated with the target clerk communication account within the historical time period with the first preset time length is determined may include that:
each communication account which has communicated with the target clerk communication account within a preset time range within the historical time period with the first preset time length is determined.

In such a manner, each determined communication account communicates with the target clerk communication account for services, the accuracy of the determined service area corresponding to the target clerk communication account may further be improved, the processed data volume may be reduced, and the processing speed may be increased.

Optionally, the step that each communication account which has communicated with the target clerk communication account within the historical time period with the first preset time length is determined may include that:
when a preset detection period is reached, each communication account which has communicated with the target clerk communication account within the current detection period is determined.

In such a manner, a server may periodically acquire each communication account which has communicated with the target clerk communication account once, and may further update the service area corresponding to the target clerk communication account, that is, real-time performance may be ensured.

Optionally, the step that the each geographical position corresponding to the each communication account which has communicated with the target clerk communication account is acquired may include that:
the each geographical position of the each communication account which has communicated with the target clerk communication account during communication between the each communication account and the target clerk communication account is acquired.

In such a manner, the accuracy of the service area corresponding to the target clerk communication account may be improved.

Optionally, the method may further include that:
a service area query request sent by a first terminal is received, the service area query request containing information about a first geographical position of the first terminal;
a first service area matched with the first geographical position is determined among service areas corresponding to each clerk communication account, and a first clerk communication account corresponding to the first service area is determined; and
a service area feedback message is sent to the first terminal, the service area feedback message containing the first clerk communication account.

In such a manner, a nearby clerk may be recommended to a user, and a success rate of service of an application may be increased.

Optionally, the step that the first service area matched with the first geographical position is determined among the service areas corresponding to each clerk communication accounts and the first clerk communication account corresponding to the first service area is determined may include that:
in a situation that the first service area to which the first geographical position belongs exists in the service areas corresponding to each clerk communication account, the first clerk communication account corresponding to the first service area is determined.

In such a manner, a clerk whose service area includes the geographical position of a user may be recommended to the user, and the success rate of service of an application may be increased.

Optionally, the method may further include that:
in a situation that a service area to which the first geographical position belongs does not exist in the service areas corresponding to each clerk communication account, the first service area which has a minimum distance not exceeding a second preset distance threshold value to the first geographical position is determined, and the first clerk communication account corresponding to the first service area is determined.

According to a second aspect of the present invention, a device for determining a service area corresponding to a clerk communication account is provided according to claim 4.

Optionally, the first determination module may be configured to:
determine each communication account which has communicated with the target clerk communication account for a communication time length not exceeding a second preset time length within the historical time period with the first preset time length.

Optionally, the first determination module may be configured to:
determine each communication account which has communicated with the target clerk communication account within a preset time range within the historical time period with the first preset time length.

Optionally, the first determination module may be configured to:
when a preset detection period is reached, determine each communication account which has communicated with the target clerk communication account within the current detection period.

Optionally, the acquisition module may be configured to:
acquire the each geographical position of each communication account which has communicated with the target clerk communication account during communication between the each communication account and the target clerk communication account.

Optionally, the device may further include:
a receiving module, configured to receive a service area query request from a first terminal, the service area query request containing information about a first geographical position of the first terminal;
a third determination module, configured to determine a first service area matched with the first geographical position in service areas corresponding to each clerk communication account, and determine a first clerk communication account corresponding to the first service area; and
a sending module, configured to send a service area feedback message to the first terminal, the service area feedback message containing the first clerk communication account.

Optionally, the third determination module may be configured to:
in a situation that the first service area to which the first geographical position belongs exists in the service areas corresponding to each clerk communication account, determine the first clerk communication account corresponding to the first service area.

Optionally, the third determination module may further be configured to:
in a situation that a service area to which the first geographical position belongs does not exist in the service areas corresponding to each clerk communication account, determine the first service area which has a minimum distance not exceeding a second preset distance threshold value to the first geographical position, and determine the first clerk communication account corresponding to the first service area.

According to a third aspect of the present invention, a device for determining a service area corresponding to a clerk communication account is provided, which may include:
a processor; and
a memory configured to store executable instructions of the processor,
wherein the processor may be configured to perform any method according to the invention.

In one particular example, the steps of any method according to the invention are determined by computer program instructions.

Consequently, according to a third aspect, the invention is also directed to a computer program for executing the steps of any method for determining a service area corresponding to a clerk communication account as described above when this program is executed by a computer.

This program can use any programming language and take the form of source code, object code or a code intermediate between source code and object code, such as a partially compiled form, or any other desirable form.

The present invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the present invention may achieve the following beneficial effects:
in the present invention, each communication account which has communicated with the target clerk communication account within the historical time period with the first preset time length is determined, each geographical position corresponding to the each communication account which has communicated with the target clerk communication account is acquired, and a service area corresponding to the target clerk communication account is determined according to the each geographical position corresponding to the each communication account. In such a manner, a service area of a target clerk may be determined by an apparatus such as a server, and the target clerk may not manually modify its own service area, so that the accuracy of the service area corresponding to the clerk communication account may be improved.

It should be understood that the above general description and detailed description below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention. In the drawings:
Fig. 1 is a flow chart showing a method for determining a service area corresponding to a clerk communication account, according to an exemplary embodiment;
Fig. 2 is a flow chart showing a method for recommending a clerk communication account, according to an exemplary embodiment;
Fig. 3 is a schematic diagram of a system architecture, according to an exemplary embodiment;
Fig. 4 is a schematic diagram of a display interface, according to an exemplary embodiment;
Fig. 5 is a schematic diagram of a device for determining a service area corresponding to a clerk communication account, according to an exemplary embodiment;
Fig. 6 is a schematic diagram of a device for determining a service area corresponding to a clerk communication account, according to an exemplary embodiment;
Fig. 7 is a schematic diagram of a device for determining a service area corresponding to a clerk communication account, according to an exemplary embodiment; and
Fig. 8 is a structure diagram of a server, according to an exemplary embodiment.

The drawings clearly illustrate embodiments of the present invention, and more detailed descriptions will be made hereinafter. These drawings and text descriptions are intended not to limit the scope of concept of the present invention in any manner but to describe the concept of the present invention for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

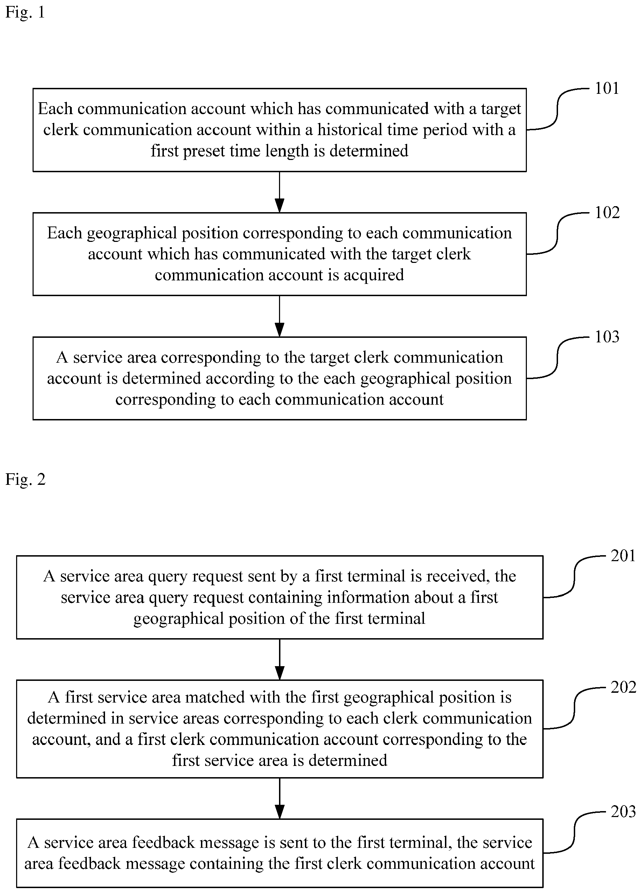

An exemplary embodiment of the present invention provides a method for determining a service area corresponding to a clerk communication account. A flow chart of the method is shown in Fig. 1. The method may be applied to a server, wherein the server may have a function of determining a service area of a target clerk communication account, and may be a background server of an application program with a function of searching for a nearby clerk. A processor may be arranged in the server, and the processor may be configured for related processing such as determining a service area corresponding to a target clerk communication account according to each geographical position of each communication account which has communicated with the target clerk communication account. A memory and a transceiver may also be arranged, the memory may be configured to store data needed and generated in the following processing process, and the transceiver may be configured to receive and send the data.

The processing flow shown in Fig. 1 will be described below with reference to implementation modes in detail, and may include contents as follows.

Step 101: each communication account which has communicated with a target clerk communication account within a historical time period with a first preset time length is determined.

Here, the communication accounts may be accounts for communication, and communication identifiers of the communication accounts may be mobile phone numbers.

During implementation, each communication identifier and each communication record corresponding to each communication account as well as each geographical position corresponding to each communication record, i.e. each geographical position of each terminal where each communication account is located during communication, may be pre-stored in the server, wherein information of each communication account stored in the server may be uploaded to the server through cloud service started respectively by each terminal where each communication account is located, each terminal may encrypt transmitted information, and the server does not implement correspondence between each communication account and each user identity. The server may further screen each clerk communication account from a database of communication identifiers of communication accounts, wherein a clerk may be a clerk providing door-to-door service, such as a courier and a car washer.

The server may pre-store a time length (which may be called a first preset time length), and the server may determine in each pre-stored communication account the communication accounts, which include screened clerk communication accounts, in corresponding communication records in a historical time period with the first preset time length, wherein the communication accounts may actively communicate with the clerk communication accounts, and may also passively receive communication initiated by the clerk communication accounts, and after all the pre-stored communication accounts are processed, each communication account which has communicated with each clerk communication account may be obtained. For example, call records with communication identifiers (such as mobile phone numbers) may be stored in the server, wherein the call records may include calling numbers and called numbers, the server may judge whether the numbers include mobile phone numbers of clerks or not according to the calling numbers and called numbers in the call records of each stored mobile phone number, so as to obtain the mobile phone numbers (communication identifiers) to which the call records including the mobile phone numbers of the clerks belong, and the server may further obtain each mobile phone number which has communicated with each mobile phone number of each clerk. In the embodiment, any clerk communication account may be called a target clerk communication account, and detailed descriptions are made with the target clerk communication account as an example, that is, the server may determine each communication account which has communicated with the target clerk communication account within the historical time period with the first preset time length.

Optionally, a communication account which has communicated with the target clerk communication account for a smaller communication time length may be determined, and correspondingly, a processing process of Step 101 may be implemented as follows: each communication account which has communicated with the target clerk communication account for a communication time length not exceeding a second preset time length within the historical time period with the first preset time length is determined.

During implementation, the server may pre-store a communication time length (which may be called a second preset time length) configured to determine a communication account which has communicated with the target clerk communication account. When determining each communication account corresponding to the target clerk communication account, the server may determine each communication account which has communicated with the target clerk communication account for a communication time length less than or equal to the second preset time length within the historical time period with the first preset time length. Since a target clerk usually communicates with a user for a smaller communication time length for a service, the second preset time length may be set to be a smaller time length, for example, 1 minute, then each determined communication account may communicate with the target clerk communication account for services, and accuracy of a determined service area corresponding to the target clerk communication account may further be improved.

Optionally, a communication account which has communicated with the target clerk communication account during working time may further be determined, and correspondingly, the processing process of Step 101 may be implemented as follows: each communication account which has communicated with the target clerk communication account within a preset time range within the historical time period with the first preset time length is determined.

During implementation, a communication time range configured to determine each communication account which has communicated with the target clerk communication account may be pre-stored. When determining each communication account corresponding to the target clerk communication account, the server may determine each communication account which has communicated with the target clerk communication account at communication moments within the preset time range within the historical time period with the first preset time length. Since the target clerk usually communicates with the user for service during work time, the preset time range may be set to be a work time range of the clerk, and for example, work time of the clerk is usually 9:00-19:00, the preset time range may be set to be 9:00-19:00, and in such a manner, each determined communication account communicates with the target clerk communication account for services, and the accuracy of the determined service area corresponding to the target clerk communication account may further be improved.

Optionally, the server may determine each communication account which has communicated with the target clerk communication account based on a detection period, and correspondingly, the processing process of Step 101 may be implemented as follows: when a preset detection period is reached, each communication account which has communicated with the target clerk communication account within the current detection period is determined.

During implementation, the detection period may be preset, and every time when the preset detection period is reached, each communication account which has communicated with the target clerk communication account within the current detection period may be determined. For example, the detection period is preset to be 30 days, and the server may determine each communication account which has communicated with the target clerk communication account within previous 30 days every 30 days. Therefore, the server may periodically acquire each communication account which has communicated with the target clerk communication account, and may further update the service area corresponding to the target clerk communication account, that is, real-time performance may be ensured.

Step 102: each geographical position corresponding to each communication account which has communicated with the target clerk communication account is acquired.

During implementation, the server may acquire each geographical position corresponding to each communication account after determining the each communication account which has communicated with the target clerk communication account, wherein the geographical positions may be represented by longitudes and latitudes. In addition, the each geographical position corresponding to each communication account may be uploaded to the server by the user through each terminal, or may also be each geographical position, acquired from a service company by the server, of each communication account for service application. For example, in a situation that the target clerk is a courier, the server may acquire, from an express company, each geographical position of each communication account to receive express.

Optionally, the each geographical position corresponding to each communication account may be each geographical position of each communication account during communication between the each communication account and the target clerk communication account, and correspondingly, a processing process of Step 102 may be implemented as follows: the each geographical position of each communication account which has communicated with the target clerk communication account during communication between the each communication account and the target clerk communication account is acquired.

During implementation, after determining the each communication account which has communicated with the target clerk communication account, the server may acquire the each geographical position of the each communication account which has communicated with the target clerk communication account during communication between the each communication account and the target clerk communication account, and specifically, each terminal where each communication account is located may enable a positioning function, each communication records corresponding to each current communication account of each terminal and each geographical position corresponding to each communication record (i.e. each geographical position during every communication with other communication accounts) may be uploaded to the server when each terminal enables a cloud service function, the server may store the each communication record and each geographical position after receiving them, and the server may further acquire the each geographical position of each communication account during communication between the each communication account and the target clerk communication account from the pre-stored communication records corresponding to each communication account and geographical positions corresponding to each communication record after determining the each communication account which has communicated with the target clerk communication account, wherein the server may send a prompting message of enabling cloud service to a terminal according to a preset period, the terminal may pop up a prompting window after receiving from the server the prompting message of enabling the cloud service, wherein a confirmation key and a cancellation key may also be displayed in the prompting window, a user may perform corresponding selection according to actual situations, the terminal may be triggered to upload communication records corresponding to a current communication account and each geographical position corresponding to each communication record to the server when the terminal receives from the user an instruction of selecting the confirmation key, and in addition, the user may also actively enable the cloud service function of the terminal to upload each communication record corresponding to the current communication account of the terminal and each geographical position corresponding to each communication record according to actual situations when the terminal does not pop up the prompting window.

Step 103: a service area corresponding to the target clerk communication account is determined according to the each geographical position corresponding to each communication account.

During implementation, the server may draw the service area corresponding to the target clerk communication account according to the each geographical position corresponding to each communication account after acquiring the each geographical position of the each communication account which has communicated with the target clerk communication account, wherein all areas may be divided into multiple small areas, and when the number of communication accounts corresponding to geographical positions which belong to a small area is greater than a preset number threshold value, the small area may be determined as the service area of the target clerk communication account, or the geographical positions around may also be connected to draw the service area corresponding to the target clerk communication account. In addition, after determining each service area corresponding to each clerk communication account according to the method, the server may store the each service area to recommend the service area of each clerk to a user to be served.

Optionally, the server may determine a service area corresponding to the target clerk communication account according to geographical positions which are distributed densely, and correspondingly, a processing process of Step 103 may be implemented as follows: for each geographical position corresponding to each communication account, distances between the each geographical position and other geographical positions are determined, and in a situation that the number of other geographical positions which have distances to a geographical position larger than a first preset distance threshold value is greater than the preset number threshold value, the geographical position is deleted; and the service area corresponding to the target clerk communication account is determined according to the geographical positions left after deletion processing is performed on the each geographical position corresponding to each communication account.

During implementation, after acquiring the each geographical position corresponding to each communication account which has communicated with the target clerk communication account, the server may delete a geographical position far away from most of the geographical positions and determine the service area corresponding to the target clerk communication account according to geographical positions left after deletion processing is performed on the geographical positions corresponding to each communication account. Specifically, for each geographical position corresponding to each communication account, the server may calculate the distances between the each geographical position and other geographical positions, may further determine whether each calculated distance is longer than a preset distance threshold value (which may be called a first preset distance threshold value) or not, and may count the number of distances longer than the first preset distance threshold value; if the number is larger than the preset number threshold value (it is indicated that a geographical position is far away from most of said other geographical positions), then the geographical position may be deleted, and then the server may determine the service area corresponding to the target clerk communication account according to the geographical positions left after deletion processing is performed on the each geographical position corresponding to each communication account. The each geographical position of each communication account which has communicated with the target clerk communication account during communication between the each communication account and the target clerk communication account may not be the each geographical position of each communication account where service can be applied, so that utilization of the corresponding geographical positions under such a condition may be avoided, and the accuracy of the service area corresponding to the target clerk communication account may be improved.

The embodiment further provides a method for recommending a clerk communication account, and a flow chart of the method is shown in Fig. 2, wherein a server may recommend a clerk communication account matching with a condition to a communication account according to each service area, determined by the method including Steps 101-103, corresponding to each clerk communication account.

A processing flow shown in Fig. 2 will be described below with reference to implementation modes in detail, and may include contents as follows.

Step 201: a service area query request sent by a first terminal is received, the service area query request containing information about a first geographical position of the first terminal.

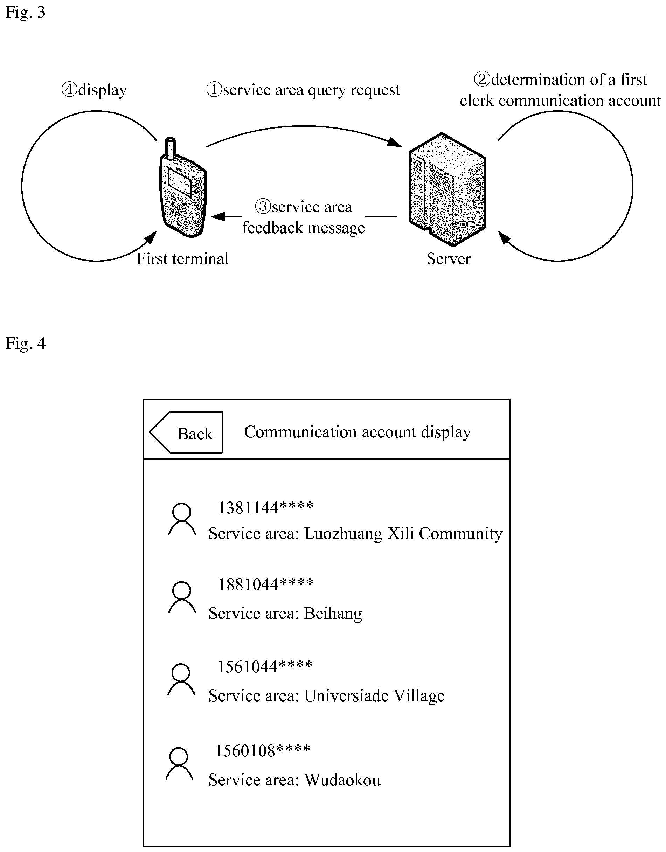

During implementation, a user to request for application of certain service may search for a nearby clerk through a terminal, and for example, the user may acquire a communication account of a closer clerk from the server through a nearby clerk searching function of the terminal when requesting a courier to come to take an express for delivery. When utilizing the nearby clerk searching function of the terminal, the user may, as shown in Fig. 3, trigger the terminal (which may be called a first terminal) to send a service area query request to the server, wherein the service area query request may contain the first geographical position of the first terminal, i.e. a geographical position of the user for service application, and in the case of express delivery, the first geographical position is a geographical position where the courier may go to take the express. After receiving the service area query request from the first terminal, the server may parse the service area query request to acquire the first geographical position of the first terminal therein.

Step 202: a first service area matched with the first geographical position is determined in service areas corresponding to each clerk communication account, and a first clerk communication account corresponding to the first service area is determined.

During implementation, after receiving the service area query request from the first terminal, the server may determine the first service area matched with the first geographical position in the determined service areas corresponding to each clerk communication account, and may further determine the first clerk communication account corresponding to the first service area according to a corresponding relationship between each clerk communication account and each service area.

Optionally, the first service area may be a service area including the first geographical position, and correspondingly, a processing process of Step 202 may be implemented as follows: in a situation that the first service area to which the first geographical position belongs exists in the service areas corresponding to each clerk communication account, the first clerk communication account corresponding to the first service area is determined.

During implementation, after receiving the service area query request from the first terminal, the server may determine whether the first service area including the first geographical position exists in the service areas corresponding to each clerk communication account or not, and in a situation that the first service area exists, that is, the first service area to which the first geographical position exists, the server may further determine the first clerk communication account corresponding to the first service area according to the corresponding relationship between each clerk communication account and the service areas.

Optionally, the first service area may also be a service area closer to the first geographical position, and correspondingly, the processing process may be implemented as follows: in a situation that the service area to which the first geographical position belongs does not exist in the service areas corresponding to each clerk communication account, the first service area which has a minimum distance not exceeding a second preset distance threshold value to the first geographical position is determined, and the first clerk communication account corresponding to the first service area is determined.

During implementation, in a situation that each service area in the service areas corresponding to each clerk communication account does not include the first geographical position, that is, the service area to which the first geographical position belongs does not exist, the server may calculate minimum distances between the first geographical position and the service areas corresponding to each clerk communication account, determine the first service area which has the minimum distance less than or equal to the second preset distance threshold value to the first geographical position, and further determine the first clerk communication account corresponding to the first service area according to the corresponding relationship between each clerk communication account and the service areas.

Step 203: a service area feedback message is sent to the first terminal, the service area feedback message containing the first clerk communication account.

During implementation, after determining the first clerk communication account, the server may send the service area feedback message to the first terminal, wherein the service area feedback message may contain the first clerk communication account, and there may be one or more first clerk communication accounts. In addition, when determining that there are a plurality of first clerk communication accounts, the server may select one or a preset number of clerk communication accounts and send it or them to the first terminal. The service area feedback message may further contain the service area corresponding to the first clerk communication account. When receiving the service area feedback message from the server, the first terminal may pop up a communication account display window, wherein a communication identifier of the first clerk communication account may be displayed in the window, and under the condition that the service area feedback message contains the service area corresponding to the first clerk communication account, the service area corresponding to the first clerk communication account may also be displayed in the communication account display window, wherein text descriptions about the service area may be displayed, a user may click the displayed service area to trigger the terminal to pop up a map window, an area including the corresponding service area may be displayed in the map window, and the corresponding service area is marked for the user to view. For example, as shown in Fig. 4, clerks are couriers, and mobile phone numbers and corresponding service areas of multiple clerks may be displayed in the communication account display window.

In the embodiment of the present invention, each communication account which has communicated with the target clerk communication account within the historical time period with the first preset time length is determined, each geographical position corresponding to each communication account which has communicated with the target clerk communication account is acquired, and the service area corresponding to the target clerk communication account is determined according to the each geographical position corresponding to each communication account. A service area of a target clerk may be determined by an apparatus such as a server, and the target clerk may not manually modify own service area, so that the accuracy of the service area corresponding to the clerk communication account may be improved.

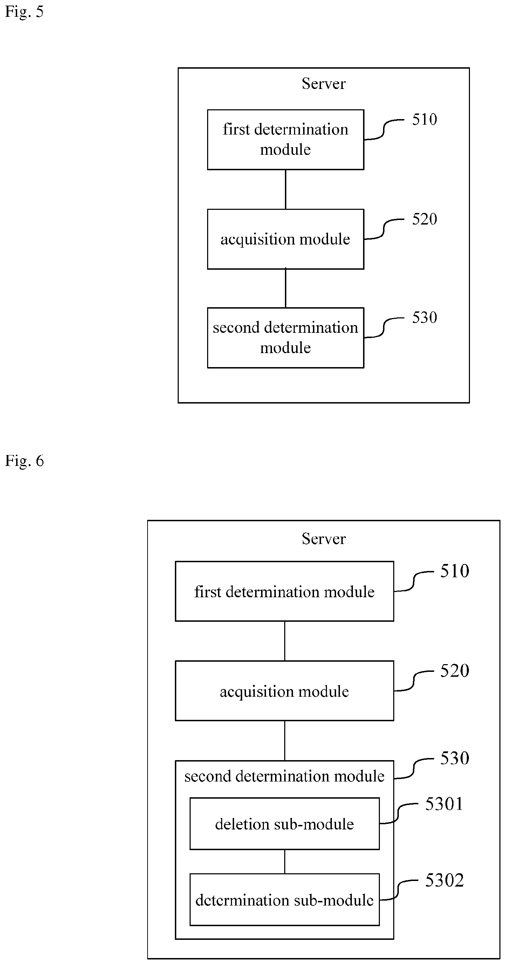

Another exemplary embodiment of the present invention provides a device for determining a service area corresponding to a clerk communication account, and as shown in Fig. 5, the device includes:
a first determination module 510, configured to determine each communication account which has communicated with a target clerk communication account within a historical time period with a first preset time length;
an acquisition module 520, configured to acquire each geographical position corresponding to each communication account which has communicated with the target clerk communication account; and
a second determination module 530, configured to determine a service area corresponding to the target clerk communication account according to the each geographical position corresponding to each communication account.

Optionally, the first determination module 510 is configured to:
determine each communication account which has communicated with the target clerk communication account for a communication time length not exceeding a second preset time length within the historical time period with the first preset time length.

Optionally, the first determination module 510 is configured to:
determine each communication account which has communicated with the target clerk communication account within a preset time range within the historical time period with the first preset time length.

Optionally, the first determination module 510 is configured to:
when a preset detection period is reached, determine each communication account which has communicated with the target clerk communication account within the current detection period.

Optionally, the acquisition module 520 is configured to:
acquire the each geographical position of each communication account which has communicated with the target clerk communication account during communication between the each communication account and the target clerk communication account.

Optionally, as shown in Fig. 6, the second determination module 530 includes: a deletion sub-module 5301, configured to, for each geographical position corresponding to each communication account, determine distances between the each geographical position and other geographical positions, and in a situation that the number of other geographical positions which have distances larger than a first preset distance threshold value to a geographical position is greater than a preset number threshold value, delete the geographical position; and
a determination sub-module 5302, configured to determine the service area corresponding to the target clerk communication account according to the geographical positions left after deletion processing is performed on the each geographical position corresponding to each communication account.

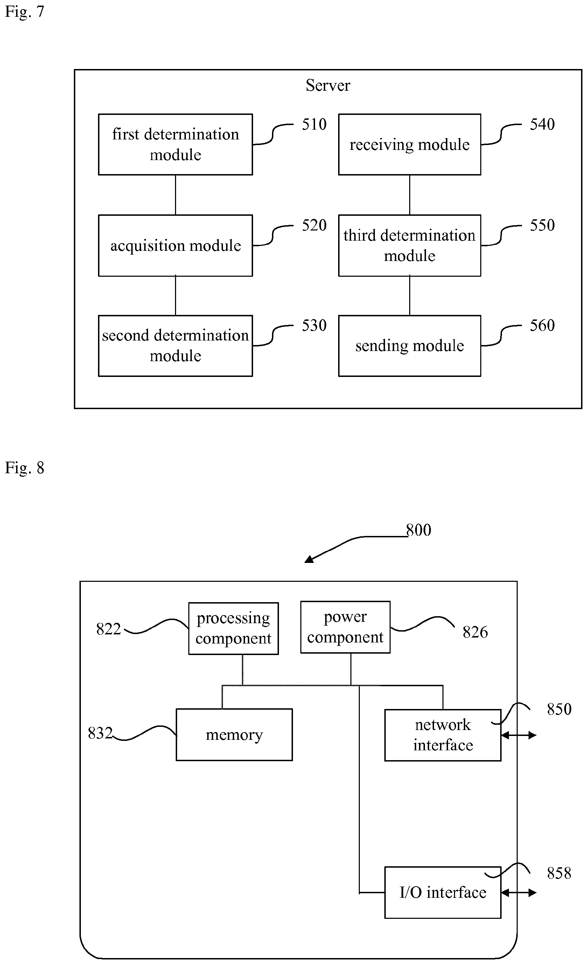

Optionally, as shown in Fig. 7, the device further includes:
a receiving module 540, configured to receive a service area query request from a first terminal, the service area query request containing information about a first geographical position of the first terminal;
a third determination module 550, configured to determine a first service area matched with the first geographical position in service areas corresponding to each clerk communication account, and determine a first clerk communication account corresponding to the first service area; and
a sending module 560, configured to send a service area feedback message to the first terminal, the service area feedback message containing the first clerk communication account.

Optionally, the third determination module 550 is configured to:
in a situation that the first service area to which the first geographical position belongs exists in the service areas corresponding to each clerk communication account, determine the first clerk communication account corresponding to the first service area.

Optionally, the third determination module 550 is further configured to:
in a situation that the service area to which the first geographical position belongs does not exist in the service areas corresponding to each clerk communication account, determine the first service area which has a minimum distance not exceeding a second preset distance threshold value to the first geographical position, and determine the first clerk communication account corresponding to the first service area.

With respect to the devices in the above embodiments, the specific manners for performing operations for individual modules therein have been described in detail in the embodiments regarding the methods, which will not be elaborated herein.

In the embodiment of the present invention, each communication account which has communicated with the target clerk communication account within the historical time period with the first preset time length is determined, each geographical position corresponding to the each communication account which has communicated with the target clerk communication account is acquired, and the service area corresponding to the target clerk communication account is determined according to the each geographical position corresponding to each communication account. A service area of a target clerk may be determined by an apparatus such as a server, and the target clerk may not manually modify own service area, so that the accuracy of the service area corresponding to the clerk communication account may be improved.

It is to be noted that: when the device for determining a service area corresponding to a clerk communication account determines a service area corresponding to a clerk communication account in the embodiment, descriptions are made only with division of the above function modules as an example, and during a practical application, functions may be allocated to different function modules for realization according to actual situation, that is, an internal structure of the server is divided into different function modules to realize all or part of the abovementioned functions. In addition, the device for determining a service area corresponding to a clerk communication account in the embodiment belongs to the same concept as the method embodiment for determining a service area corresponding to a clerk communication account, and details about its specific implementation process refer to the method embodiment, and will not be elaborated herein.

Another exemplary embodiment of the present invention provides a structure diagram of a server. Fig. 8 is a block diagram of a device 800 for determining a service area corresponding to a clerk communication account, according to an exemplary embodiment. For example, the device 800 may be provided as a server. Referring to Fig. 8, the device 800 includes a processing component 822, which further includes one or more processors, and a memory resource represented by a memory 832, which is configured to store instructions executable for the processing component 822, for example, application programs. The application programs stored in the memory 832 may include one or more than one modules, each of which corresponds to a set of instructions. In addition, the processing component 822 is configured to execute the instructions to execute the abovementioned method.

The device 800 may further include a power component 826 configured to execute power management of the device 800, a wired or wireless network interface 850 configured to connect the device 800 to a network, and an Input/Output (I/O) interface 858. The device 800 may be operated on the basis of an operating system stored in the memory 832, such as Windows ServerTM, Mac OS XTM, UnixTM, LinuxTM or FreeBSDTM.

The device 800 may include a memory, and at least one program, wherein the at least one program is stored in the memory, and the at least one processor is configured to execute the at least one program for instructions including the following operation that:
each communication account which has communicated with a target clerk communication account within a historical time period with a first preset time length is determined;
each geographical position corresponding to each communication account which has communicated with the target clerk communication account is acquired; and
a service area corresponding to the target clerk communication account is determined according to the each geographical position corresponding to each communication account.

Optionally, the operation that each communication account which has communicated with the target clerk communication account within the historical time period with the first preset time length is determined includes that:
each communication account which has communicated with the target clerk communication account for a communication time length not exceeding a second preset time length within the historical time period with the first preset time length is determined.

Optionally, the operation that each communication account which has communicated with the target clerk communication account within the historical time period with the first preset time length is determined includes that:
each communication account which has communicated with the target clerk communication account within a preset time range within the historical time period with the first preset time length is determined.

Optionally, the operation that each communication account which has communicated with the target clerk communication account within the historical time period with the first preset time length is determined includes that:
when a preset detection period is reached, each communication account which has communicated with the target clerk communication account within the current detection period is determined.

Optionally, the operation that the each geographical position corresponding to each communication account which has communicated with the target clerk communication account are acquired includes that:
the each geographical position of each communication account which has communicated with the target clerk communication account during communication between the each communication account and the target clerk communication account is acquired.

Optionally, the operation that the service area corresponding to the target clerk communication account is determined according to the each geographical position corresponding to each communication account includes that:
for the each geographical position corresponding to each communication account, distances between the each geographical position and other geographical positions are determined, and in a situation that the number of said other geographical positions which have distances larger than a first preset distance threshold value to a geographical position is greater than a preset number threshold value, the geographical position is deleted; and
the service area corresponding to the target clerk communication account is determined according to the geographical positions left after deletion processing is performed on the each geographical position corresponding to each communication account.

Optionally, the method further includes that:
a service area query request sent by a first terminal is received, the service area query request containing information about a first geographical position of the first terminal;
a first service area matched with the first geographical position is determined in service areas corresponding to each clerk communication account, and a first clerk communication account corresponding to the first service area is determined; and
a service area feedback message is sent to the first terminal, the service area feedback message containing the first clerk communication account.

Optionally, the operation that the first service area matched with the first geographical position is determined in the service areas corresponding to each clerk communication accounts and the first clerk communication account corresponding to the first service area is determined includes that:
in a situation that the first service area to which the first geographical position belongs exists in the service areas corresponding to each clerk communication account, the first clerk communication account corresponding to the first service area is determined.

Optionally, the method further includes that:
in a situation that the service area to which the first geographical position belongs does not exist in the service areas corresponding to each clerk communication account, the first service area which has a minimum distance not exceeding a second preset distance threshold value to the first geographical position is determined, and the first clerk communication account corresponding to the first service area is determined.

In the embodiments of the present invention, each communication account which has communicated with the target clerk communication account within the historical time period with the first preset time length is determined, the each geographical position corresponding to each communication account which has communicated with the target clerk communication account is acquired, and the service area corresponding to the target clerk communication account is determined according to the each geographical position corresponding to each communication account. A service area of a target clerk may be determined by an apparatus such as a server, and the target clerk may not manually modify own service area, so that the accuracy of the service area corresponding to the clerk communication account may be improved.

Other embodiments of the present invention will be apparent to those skilled in the art from consideration of the specification and practice of the present invention. This application is intended to cover any variations, uses, or adaptations of the present invention following the general principles thereof and including such departures from the present invention as come within known or customary practice in the art. The specification and examples should be considered as exemplary only, with a true scope of the present invention being indicated by the following claims.

It will be appreciated that the present invention is not limited to the exact construction that has been described above and illustrated in the accompanying drawings, and that various modifications and changes may be made without departing from the scope thereof. The scope of the present invention shall only be limited by the appended claims.

## Claims

1. A method for determining a service area corresponding to a clerk communication account, wherein the method comprises:
determining, by a server, each communication account which has communicated with a target clerk communication account within a historical time period with a first preset time length (101), wherein the target clerk communication account is located in a terminal, the communication account is located in another terminal that communicates with the terminal where the target clerk communication account is located, and there are a plurality of communication accounts which have communicated with the target clerk communication account within the historical time period with the first preset time length;
acquiring, by the server, geographical positions corresponding to the plurality of communication accounts which have communicated with the target clerk communication account (102); and
for the geographical positions corresponding to the plurality of communication accounts:
determining, by the server, distances between each geographical position and other geographical positions of the geographical positions;
deleting, by the server, the geographical position in a situation that a number of the other geographical positions of the geographical positions, which have a distance to the geographical position larger than a first preset distance threshold value is greater than a preset number threshold value; and
determining, by the server, a service area corresponding to the target clerk communication account by drawing the service area according to remaining geographical positions after the deleting is performed on the geographical positions corresponding to the plurality of communication accounts.

2. The method according to claim 1, wherein determining each communication account which has communicated with the target clerk communication account within the historical time period with the first preset time length comprises:
determining each communication account which has communicated with the target clerk communication account for a communication time length not exceeding a second preset time length within the historical time period with the first preset time length.

3. The method according to claim 1 or 2, further comprising:
receiving a service area query request from a first terminal, the service area query request containing information about a first geographical position of the first terminal;
determining a first service area matched with the first geographical position in service areas corresponding to each clerk communication account, and determining a first clerk communication account corresponding to the first service area; and
sending a service area feedback message to the first terminal, the service area feedback message containing the first clerk communication account.

4. A device for determining a service area corresponding to a clerk communication account, wherein the device comprises:
a first determination module (510), configured to determine each communication account which has communicated with a target clerk communication account within a historical time period with a first preset time length, wherein the target clerk communication account is located in a terminal, the communication account is located in another terminal that communicates with the terminal where the target clerk communication account is located, and there are a plurality of communication accounts which have communicated with the target clerk communication account within the historical time period with the first preset time length;
an acquisition module (520), configured to acquire geographical positions corresponding to the plurality of communication accounts which have communicated with the target clerk communication account; and
a second determination module (530), configured to, for the geographical positions corresponding to the plurality of communication accounts: determine distances between each geographical position and other geographical positions of the geographical positions; delete the geographical position in a situation that a number of the other geographical positions of the geographical positions, which have a distance to the geographical position larger than a first preset distance threshold value is greater than a preset number threshold value; and determine a service area corresponding to the target clerk communication account by drawing the service area according to remaining geographical positions after the deleting is performed on the geographical positions corresponding to the plurality of communication accounts.

5. The device according to claim 4, wherein the first determination module is configured to:
determine each communication account which has communicated with the target clerk communication account for a communication time length not exceeding a second preset time length within the historical time period with the first preset time length.

6. The device according to claim 4 or 5, wherein the first determination module is configured to:
determine each communication account which has communicated with the target clerk communication account within a preset time range within the historical time period with the first preset time length.

7. The device according to any one of claims 4 to 6, wherein the first determination module is configured to:
when a preset detection period is reached, determine each communication account which has communicated with the target clerk communication account within the current detection period.

8. The device according to any one of claims 4 to 7, wherein the acquisition module is configured to:
acquire each geographical position of each communication account which has communicated with the target clerk communication account during communication between the each communication account and the target clerk communication account.

9. The device according to any one of claims 4 to 8, further comprising:
a receiving module, configured to receive a service area query request from a first terminal, the service area query request containing information about a first geographical position of the first terminal;
a third determination module, configured to determine a first service area matched with the first geographical position in service areas corresponding to each clerk communication account, and determine a first clerk communication account corresponding to the first service area; and
a sending module, configured to send a service area feedback message to the first terminal, the service area feedback message containing the first clerk communication account.

10. The device according to claim 9, wherein the third determination module is configured to:
in a situation that the first service area to which the first geographical position belongs exists in the service areas corresponding to each clerk communication account, determine the first clerk communication account corresponding to the first service area.

11. The device according to claim 10, wherein the third determination module is further configured to:
in a situation that a service area to which the first geographical position belongs does not exist in the service areas corresponding to each clerk communication account, determine the first service area which has a minimum distance not exceeding a second preset distance threshold value to the first geographical position, and determine the first clerk communication account corresponding to the first service area.

12. A device for determining a service area corresponding to a clerk communication account, wherein the device comprises:
a processor; and
a memory configured to store executable instructions of the processor,
wherein the processor is configured to perform any method according to claims 1 to 3.

13. A computer program including instructions for executing the steps of a method for determining a service area corresponding to a clerk communication account according to any one of claims 1 to 3 when said program is executed by a computer.

14. A recording medium readable by a computer and having recorded thereon a computer program according to claim 13.

## Patentansprüche

1. Verfahren zum Bestimmen eines Servicebereichs, der einem Sachbearbeiter-Kommunikationskonto entspricht, wobei das Verfahren umfasst:
Bestimmen, durch einen Server, jedes Kommunikationskontos, das mit einem Ziel-Sachbearbeiter-Kommunikationskonto innerhalb einer historischen Zeitperiode mit einer ersten voreingestellten Zeitlänge kommuniziert hat (101), wobei sich das Ziel-Sachbearbeiter-Kommunikationskonto in einem Terminal befindet, wobei sich das Kommunikationskonto in einem anderen Terminal befindet, das mit dem Terminal kommuniziert, in dem sich das Ziel-Sachbearbeiter-Kommunikationskonto befindet, und wobei es eine Vielzahl von Kommunikationskonten gibt, die mit dem Ziel-Sachbearbeiter-Kommunikationskonto innerhalb der historischen Zeitperiode mit der ersten voreingestellten Zeitlänge kommuniziert haben;
Akquirieren, durch den Server, von geographischen Positionen, die der Vielzahl von Kommunikationskonten entsprechen, die mit dem Ziel-Sachbearbeiter-Kommunikationskonto kommuniziert haben (102); und
für die geographischen Positionen, die der Vielzahl von Kommunikationskonten entsprechen:
Bestimmen, durch den Server, von Entfernungen zwischen jeder geographischen Position und anderen geographischen Positionen der geographischen Positionen;
Löschen, durch den Server, der geographischen Position in einer Situation, in der eine Anzahl der anderen geographischen Positionen der geographischen Positionen, die eine Entfernung zu der geographischen Position haben, der größer als ein erster voreingestellter Entfernungs-Schwellenwert ist, größer als ein voreingestellter Anzahl-Schwellenwert ist; und
Bestimmen, durch den Server, eines dem Ziel-Sachbearbeiter-Kommunikationskonto entsprechenden Servicebereichs, indem der Servicebereich gemäß von verbleibenden geographischen Positionen gezeichnet wird, nachdem das Löschen an den geographischen Positionen entsprechend der Vielzahl von Kommunikationskonten durchgeführt worden ist.

2. Verfahren nach Anspruch 1, wobei das Bestimmen jedes Kommunikationskontos, das mit dem Ziel-Sachbearbeiter-Kommunikationskonto innerhalb der historischen Zeitperiode mit der ersten voreingestellten Zeitlänge kommuniziert hat, folgendes umfasst:
Bestimmen jedes Kommunikationskontos, das mit dem Ziel-Sachbearbeiter-Kommunikationskonto für eine Kommunikationszeitlänge kommuniziert hat, die eine zweite voreingestellte Zeitlänge innerhalb der historischen Zeitperiode mit der ersten voreingestellten Zeitlänge nicht überschreitet.

3. Verfahren nach Anspruch 1 oder 2, weiter umfassend:
Empfangen einer Servicebereichsabfrageanforderung von einem ersten Terminal, wobei die Servicebereichsabfrageanforderung Informationen über eine erste geographische Position des ersten Terminals enthält;
Bestimmen eines ersten Servicebereichs, der mit der ersten geographischen Position in Servicebereichen zusammenpasst, die jedem Sachbearbeiter-Kommunikationskonto entsprechen, und Bestimmen eines ersten Sachbearbeiter-Kommunikationskontos, das dem ersten Servicebereich entspricht; und
Senden einer Service-Bereichs-Feedback-Nachricht an das erste Terminal, wobei die Service-Bereichs-Feedback-Nachricht das erste Sachbearbeiter-Kommunikationskonto enthält.

4. Vorrichtung zum Bestimmen eines Servicebereichs, der einem Sachbearbeiter-Kommunikationskonto entspricht, wobei die Vorrichtung folgendes aufweist:
ein erstes Bestimmungsmodul (510), das konfiguriert ist, um jedes Kommunikationskonto zu bestimmen, das mit einem Ziel-Sachbearbeiter-Kommunikationskonto innerhalb einer historischen Zeitperiode mit einer ersten voreingestellten Zeitlänge kommuniziert hat, wobei sich das Ziel-Sachbearbeiter-Kommunikationskonto in einem Terminal befindet, wobei sich das Kommunikationskonto in einem anderen Terminal befindet, das mit dem Terminal kommuniziert, in dem sich das Ziel-Sachbearbeiter-Kommunikationskonto befindet, und wobei es eine Vielzahl von Kommunikationskonten gibt, die mit dem Ziel-Sachbearbeiter-Kommunikationskonto innerhalb der historischen Zeitperiode mit der ersten voreingestellten Zeitlänge kommuniziert haben;
ein Akquisemodul (520), das konfiguriert ist, geografische Positionen zu akquirieren, die der Vielzahl von Kommunikationskonten entsprechen, die mit dem Ziel-Sachbearbeiter-Kommunikationskonto kommuniziert haben; und
ein zweites Bestimmungsmodul (530), das konfiguriert ist, um für die geographischen Positionen, die der Vielzahl von Kommunikationskonten entsprechen: Entfernungen zwischen jeder geographischen Position und anderen geographischen Positionen der geographischen Positionen zu bestimmen; die geographische Position in einer Situation zu löschen, in der eine Anzahl der anderen geographischen Positionen der geographischen Positionen, die eine Entfernung zu der geographischen Position haben, die größer als ein erster voreingestellter Entfernungs-Schwellenwert ist, größer als ein voreingestellter Anzahl-Schwellenwert ist; und einen Servicebereich zu bestimmen, der dem Ziel-Sachbearbeiter-Kommunikationskonto entspricht, durch Zeichnen des Servicebereiches gemäß verbleibenden geographischen Positionen, nachdem das Löschen an den geographischen Positionen durchgeführt worden ist, die der Vielzahl von Kommunikationskonten entsprechen.

5. Vorrichtung nach Anspruch 4, wobei das erste Bestimmungsmodul konfiguriert ist um:
jedes Kommunikationskonto zu bestimmen, das mit dem Ziel-Sachbearbeiter-Kommunikationskonto für eine Kommunikationszeitlänge kommuniziert hat, die eine zweite voreingestellte Zeitlänge innerhalb der historischen Zeitperiode mit der ersten voreingestellten Zeitlänge nicht überschreitet.

6. Vorrichtung nach Anspruch 4 oder 5, wobei das erste Bestimmungsmodul konfiguriert ist um:
jedes Kommunikationskonto zu bestimmen, das mit dem Ziel-Sachbearbeiter-Kommunikationskonto innerhalb eines voreingestellten Zeitbereiches innerhalb der historischen Zeitperiode mit der ersten voreingestellten Zeitlänge kommuniziert hat.

7. Vorrichtung nach einem der Ansprüche 4 bis 6, wobei das erste Bestimmungsmodul konfiguriert ist um:
wenn eine voreingestellte Erfassungsperiode erreicht ist, jedes Kommunikationskonto zu bestimmen, das innerhalb der vorliegenden Erfassungsperiode mit dem Ziel-Sachbearbeiter-Kommunikationskonto kommuniziert hat.

8. Vorrichtung nach einem der Ansprüche 4 bis 7, wobei das Akquisemodul konfiguriert ist um:
jede geografische Position jedes Kommunikationskontos, das während einer Kommunikation zwischen dem jeweiligen Kommunikationskonto und dem Ziel-Sachbearbeiter-Kommunikationskonto mit dem Ziel-Sachbearbeiter-Kommunikationskonto kommuniziert hat, zu akquirieren.

9. Vorrichtung nach einem der Ansprüche 4 bis 8, die weiter folgendes aufweist:
ein Empfangsmodul, das konfiguriert ist, um eine Servicebereich-Abfrageanforderung von einem ersten Terminal zu empfangen, wobei die Servicebereich-Abfrageanforderung Informationen über eine erste geografische Position des ersten Terminals enthält;
ein drittes Bestimmungsmodul, das konfiguriert ist, um einen ersten Servicebereich zu bestimmen, der mit der ersten geografischen Position in Servicebereichen zusammenpasst, die jedem Sachbearbeiter-Kommunikationskonto entsprechen, und ein erstes Sachbearbeiter-Kommunikationskonto zu bestimmen, das dem ersten Servicebereich entspricht; und
ein Sendemodul, das konfiguriert ist, um eine Servicebereichs-Feedback-Nachricht an das erste Terminal zu senden, wobei die Service-Bereichs-Feedback-Nachricht das erste Sachbearbeiter-Kommunikationskonto enthält.

10. Vorrichtung nach Anspruch 9, wobei das dritte Bestimmungsmodul konfiguriert ist um:
in einer Situation, in der der erste Servicebereich, zu dem die erste geographische Position gehört, in den Servicebereichen existiert, die jedem Sachbearbeiter-Kommunikationskonto entsprechen, das erste Sachbearbeiter-Kommunikationskonto zu bestimmen, das dem ersten Servicebereich entspricht.

11. Vorrichtung nach Anspruch 10, wobei das dritte Bestimmungsmodul weiter konfiguriert ist, um:
in einer Situation, in der ein Servicebereich, zu dem die erste geographische Position gehört, in den Servicebereichen, die jedem Sachbearbeiter-Kommunikationskonto entsprechen, nicht existiert, den ersten Servicebereich zu bestimmen, der eine Mindestentfernung zur ersten geographischen Position hat, die einen zweiten voreingestellten Entfernungs-Schwellenwert nicht überschreitet, und das erste Sachbearbeiter-Kommunikationskonto zu bestimmen, das dem ersten Servicebereich entspricht.

12. Vorrichtung zum Bestimmen eines Servicebereichs, der einem Sachbearbeiter-Kommunikationskonto entspricht, wobei die Vorrichtung folgendes aufweist:
einen Prozessor; und
einen Speicher, der konfiguriert ist, um ausführbare Anweisungen des Prozessors zu speichern,
wobei der Prozessor konfiguriert ist, um irgendein Verfahren nach den Ansprüchen 1 bis 3 auszuführen.

13. Computerprogramm mit Befehlen zum Ausführen der Schritte eines Verfahrens zum Bestimmen eines Servicebereichs, der einem Sachbearbeiter-Kommunikationskonto gemäß einem der Ansprüche 1 bis 3 entspricht, wenn das Programm von einem Computer ausgeführt wird.

14. Aufzeichnungsmedium, das von einem Computer lesbar ist und auf dem ein Computerprogramm nach Anspruch 13 aufgezeichnet ist.

## Revendications

1. Procédé pour déterminer une zone de service correspondant à un compte de communication d'employé, dans lequel le procédé comporte les étapes consistant à :
déterminer, par un serveur, chaque compte de communication qui a communiqué avec un compte de communication d'employé cible sur une période de temps historique avec une première durée prédéfinie (101), dans lequel le compte de communication d'employé cible est situé dans un terminal, le compte de communication est situé dans un autre terminal qui communique avec le terminal où le compte de communication d'employé cible est situé, et il y a une pluralité de comptes de communication qui ont communiqué avec le compte de communication d'employé cible sur la période de temps historique avec la première durée prédéfinie ;
acquérir, par le serveur, des positions géographiques correspondant à la pluralité de comptes de communication qui ont communiqué avec le compte de communication d'employé cible (102) ; et
pour les positions géographiques correspondant à la pluralité de comptes de communication :
déterminer, par le serveur, des distances entre chaque position géographique et d'autres positions géographiques parmi les positions géographiques ;
supprimer, par le serveur, la position géographique dans une situation où un nombre des autres positions géographiques parmi les positions géographiques, qui ont une distance par rapport à la position géographique plus grande qu'une première valeur de seuil de distance prédéfinie, est supérieur à une valeur de seuil numérique prédéfinie ; et
déterminer, par le serveur, une zone de service correspondant au compte de communication d'employé cible en dessinant la zone de service en fonction de positions géographiques restantes après la réalisation de la suppression sur les positions géographiques correspondant à la pluralité de comptes de communication.

2. Procédé selon la revendication 1, dans lequel la détermination de chaque compte de communication qui a communiqué avec le compte de communication d'employé cible sur la période de temps historique avec la première durée prédéfinie comporte les étapes consistant à :
déterminer chaque compte de communication qui a communiqué avec le compte de communication d'employé cible pendant une durée de communication ne dépassant pas une seconde durée prédéfinie sur la période de temps historique avec la première durée prédéfinie.

3. Procédé selon la revendication 1 ou 2, comportant en outre les étapes consistant à :
recevoir d'un premier terminal une requête d'interrogation de zone de service, la requête d'interrogation de zone de service contenant des informations concernant une première position géographique du premier terminal ;
déterminer une première zone de service concordant avec la première position géographique dans des zones de service correspondant à chaque compte de communication d'employé, et déterminer un premier compte de communication d'employé correspondant à la première zone de service ; et
envoyer un message de retour de zone de service au premier terminal, le message de retour de zone de service contenant le premier compte de communication d'employé.

4. Dispositif pour déterminer une zone de service correspondant à un compte de communication d'employé, dans lequel le dispositif comporte :
un premier module de détermination (510), configuré pour déterminer chaque compte de communication qui a communiqué avec un compte de communication d'employé cible sur une période de temps historique avec une première durée prédéfinie, dans lequel le compte de communication d'employé cible est situé dans un terminal, le compte de communication est situé dans un autre terminal qui communique avec le terminal où le compte de communication d'employé cible est situé, et il y a une pluralité de comptes de communication qui ont communiqué avec le compte de communication d'employé cible sur la période de temps historique avec la première durée prédéfinie ;
un module d'acquisition (520), configuré pour acquérir des positions géographiques correspondant à la pluralité de comptes de communication qui ont communiqué avec le compte de communication d'employé cible ; et
un deuxième module de détermination (530), configuré pour, pour les positions géographiques correspondant à la pluralité de comptes de communication : déterminer des distances entre chaque position géographique et d'autres positions géographiques parmi les positions géographiques ; supprimer la position géographique dans une situation où un nombre des autres positions géographiques parmi les positions géographiques, qui ont une distance par rapport à la position géographique plus grande qu'une première valeur de seuil de distance prédéfinie, est supérieur à une valeur de seuil numérique prédéfinie ; et déterminer une zone de service correspondant au compte de communication d'employé cible en dessinant la zone de service en fonction de positions géographiques restantes après la réalisation de la suppression sur les positions géographiques correspondant à la pluralité de comptes de communication.

5. Dispositif selon la revendication 4, dans lequel le premier module de détermination est configuré pour :
déterminer chaque compte de communication qui a communiqué avec le compte de communication d'employé cible pendant une durée de communication ne dépassant pas une seconde durée prédéfinie sur la période de temps historique avec la première durée prédéfinie.

6. Dispositif selon la revendication 4 ou 5, dans lequel le premier module de détermination est configuré pour :
déterminer chaque compte de communication qui a communiqué avec le compte de communication d'employé cible sur une plage de temps prédéfinie sur la période de temps historique avec la première durée prédéfinie.

7. Dispositif selon l'une quelconque des revendications 4 à 6, dans lequel le premier module de détermination est configuré pour :
lorsqu'une période de détection prédéfinie est atteinte, déterminer chaque compte de communication qui a communiqué avec le compte de communication d'employé cible sur la période de détection actuelle.

8. Dispositif selon l'une quelconque des revendications 4 à 7, dans lequel le module d'acquisition est configuré pour :
acquérir chaque position géographique de chaque compte de communication qui a communiqué avec le compte de communication d'employé cible pendant une communication entre chaque compte de communication et le compte de communication d'employé cible.

9. Dispositif selon l'une quelconque des revendications 4 à 8, comportant en outre :
un module de réception, configuré pour recevoir d'un premier terminal une requête d'interrogation de zone de service, la requête d'interrogation de zone de service contenant des informations concernant une première position géographique du premier terminal ;
un troisième module de détermination, configuré pour déterminer une première zone de service concordant avec la première position géographique dans des zones de service correspondant à chaque compte de communication d'employé, et déterminer un premier compte de communication d'employé correspondant à la première zone de service ; et
un module d'envoi, configuré pour envoyer un message de retour de zone de service au premier terminal, le message de retour de zone de service contenant le premier compte de communication d'employé.

10. Dispositif selon la revendication 9, dans lequel le troisième module de détermination est configuré pour :
dans une situation où la première zone de service à laquelle appartient la première position géographique existe dans les zones de service correspondant à chaque compte de communication d'employé, déterminer le premier compte de communication d'employé correspondant à la première zone de service.

11. Dispositif selon la revendication 10, dans lequel le troisième module de détermination est en outre configuré pour :
dans une situation où une zone de service à laquelle appartient la première position géographique n'existe pas dans les zones de service correspondant à chaque compte de communication d'employé, déterminer la première zone de service qui a une distance minimale ne dépassant pas une seconde valeur de seuil de distance prédéfinie jusqu'à la première position géographique, et déterminer le premier compte de communication d'employé correspondant à la première zone de service.

12. Dispositif pour déterminer une zone de service correspondant à un compte de communication d'employé, dans lequel le dispositif comporte :
un processeur ; et
une mémoire configurée pour stocker des instructions exécutables par le processeur,
dans lequel le processeur est configuré pour mettre en œuvre un procédé quelconque selon les revendications 1 à 3.

13. Programme informatique incluant des instructions pour exécuter les étapes d'un procédé destiné à déterminer une zone de service correspondant à un compte de communication d'employé selon l'une quelconque des revendications 1 à 3 lorsque ledit programme est exécuté par un ordinateur.

14. Support d'enregistrement lisible par un ordinateur et ayant un programme informatique selon la revendication 13 stocké sur celui-ci.
